# EUROPÄISCHE PATENTSCHRIFT

(11) **EP 2 812 584 B1**
(45) Veröffentlichungstag und Bekanntmachung des Hinweises auf die Patenterteilung: **30.05.2018**
(21) Anmeldenummer: 13720861.7
(22) Anmeldetag: 25.04.2013
(51) Int. Cl.: F15B 7/08, F04B 17/00, H02N 2/04

(54) **AKTORVORRICHTUNG UND VERFAHREN ZUM EINSTELLEN EINER POSITION EINES LINEAR BEWEGLICHEN ELEMENTS**
ACTUATOR DEVICE AND METHOD FOR CONTROLLING THE POSITION OF A LINEARLY MOVABLE ELEMENT
DISPOSITIF ACTIONNEUR ET PROCÉDÉ DE RÉGLAGE DE LA POSITION D'UN ÉLÉMENT À DÉPLACEMENT LINÉAIRE

(30) Priorität: 25.04.2012 DE 102012206834
(43) Veröffentlichungstag der Anmeldung: 17.12.2014
(73) Patentinhaber: Siemens Aktiengesellschaft, 80333 München (DE)
(72) Erfinder: BACHMAIER, Georg, 80469 München (DE); EBELSBERGER, Gerit, 81737 München (DE); FREITAG, Reinhard, 81379 München (DE); GÖDECKE, Andreas, 81677 München (DE); ZÖLS, Wolfgang, 81249 München-Lochhausen (DE)
(86) Internationale Anmeldenummer: PCT/EP2013/058621
(87) Internationale Veröffentlichungsnummer: WO 2013/160398

(56) Entgegenhaltungen:
- EP-A2- 1 190 829
- DE-A1-102008 046 562
- JP-A- S6 228 507
- JP-A- 2000 314 402
- JP-A- 2001 012 402

## Beschreibung

Die Erfindung betrifft eine Aktorvorrichtung zum Erzeugen einer linearen Bewegung nach dem Oberbegriff von Patentanspruch 1 sowie ein Verfahren zum Einstellen einer Position eines linear beweglichen Elements.

Für bestimmte Justieraufgaben werden Aktoren benötigt, mit denen man möglichst präzise lineare Einstellungen vornehmen kann. Idealerweise sind solche Aktoren möglichst klein, elektrisch betrieben, beständig gegen Umweltbedingungen, insbesondere Verschmutzungen und möglichst verschleißarm.

Es ist bekannt, derartige Justieraufgaben aufwändig manuell vorzunehmen bzw. elektromagnetische Linearaktoren, Spindelantriebe oder Pneumatik-Hydraulik-Aktoren vorzusehen. Auch die Verwendung von piezoelektrischen oder magnetoresistiven Aktoren ist bekannt. Für größere Auslenkungen sind auch piezoelektrische Aktoren bekannt, die nach dem Raupen- bzw. Inchworm-Prinzip arbeiten. Hierfür werden in der Regel drei Aktoren benötigt, nämlich je ein Klemmaktorelement vorne und hinten und ein Aktorelement für die Fortbewegung.

Bekannte Aktoren sind in der Regel aufwändig und nicht beständig gegen Verschmutzung und Verschleiß.

Neben den oben geschilderten Aktor-Typen ist auch ein Linearantrieb bekannt, der lediglich mit einer Masse, einer Klemmvorrichtung und nur einem Aktorelement auskommt. Zwischen der Masse und der Klemmvorrichtung wird ein Piezoaktor platziert, der mit einer steigenden Spannung so angesteuert wird, dass aus der daraus resultierenden Auslenkungskraft die Masse beschleunigt wird, die Kraft aber unterhalb der Haftreibungskraft der Klemmvorrichtung bleibt, an der sich der Aktor abstützt. Bei Erreichen der maximalen Auslenkung des Piezoelements wird die Ansteuerspannung so schnell reduziert, dass das daraus resultierende Zusammenziehen des Piezoelements zu einer negativen Beschleunigungskraft führt, die zwar die Bewegung der Masse reduziert, aber so groß ist, dass die Haftreibung der Klemmvorrichtung überschritten wird, die Klemmvorrichtung also in Bewegungsrichtung nachgezogen wird und in der nächsten Auslenkungsphase den neuen, jetzt in Bewegungsrichtung verschobenen Abstützpunkt bildet. Wird anstelle des Ansteuerprofils "langsames Auslenken, schnelles Zusammenziehen" die Reihenfolge getauscht, so dreht sich auch die Bewegungsrichtung dieses Linearmotors um.

Ein Nachteil dieses Verfahrens ist die Abhängigkeit der Auslenkung von der Größe der aktuellen Haftreibung des Klemmelements. Insbesondere wenn sich die Haftreibung durch den Eintrag von Öl oder Schmutz verändert, kann die gewünschte Präzision oder auch die gesamte Funktionsfähigkeit der Einstellvorrichtung verloren gehen. Das System ist ferner, wie bei allen mechanischen Systemen, bei denen zwei Flächen aufeinander reiben, langfristig anfällig für Verschleiß und damit für Veränderungen der Systemeigenschaften.

Die JP 2000 314402 A offenbart eine Aktorvorrichtung zum Erzeugen einer linearen Bewegung, mit einem hydraulischen Aktor, welcher ein erstes Kolbenelement zum Betätigen des Aktors und ein zweites Kolbenelement zum Erzeugen der linearen Bewegung umfasst, welchen jeweilige fluidisch gekoppelte Arbeitsräume zugeordnet sind, deren Volumen durch Bewegen des jeweiligen Kolbenelements änderbar ist. Dabei ist ein Piezoaktor zum Ausüben einer Kraft auf das erste Kolbenelement vorgesehen. Ferner sind die jeweiligen Arbeitsräume über zwei gegenläufig ausgerichtete Rückschlagventile verbunden.

Die JP 2001 012402 A offenbart eine Aktorvorrichtung mit zwei Kolbenelementen, denen jeweilige fluidisch gekoppelte Arbeitsräume zugeordnet sind. Durch Bewegen des jeweiligen Kolbenelements kann ein jeweiliges Volumen der Arbeitsräume geändert werden. Ferner ist ein Magnetelement zum Ausüben einer Kraft auf eines der Kolbenelemente vorgesehen.

Die DE 10 2008 046 562 A1 offenbart einen hydraulischen Linearantrieb mit einem Kolben, welcher in einem Zylinder verschiebbar gelagert ist, wobei der Zylinder einen Einlass aufweist, über welchen mittels einer Pumpeinrichtung ein Fluid in den Zylinder einbringbar ist. Der Zylinder weist ferner einen Auslass auf, über welchen Fluid aus dem Zylinder entnehmbar ist. Dabei ist es vorgesehen, dass zum Antrieb der Pumpeinrichtung ein piezoelektrischer und/oder ein magnetostriktiver Aktor vorgesehen ist.

Der JP S62 28507 A ist ein Aktor mit einem elektrostriktiven Körper als bekannt zu entnehmen. Mittels des elektrostriktiven Körpers ist eine Stange bewegbar.

Schließlich offenbart die EP 1 190 829 A2 eine Aktorvorrichtung zum Erzeugen einer linearen Bewegung, mit einem Kolben, welcher in einem Zylinder angeordnet ist. Der Kolben ist bewegbar, indem der Kolben über ein Arbeitsfluid mit einem Druck beaufschlagt wird. Das Arbeitsfluid wird dabei durch eine Antriebskraft eines piezoelektrischen Elements unter Druck gesetzt, um den Kolben anzutreiben.

Der vorliegenden Erfindung liegt somit die Aufgabe zugrunde, eine Aktorvorrichtung sowie ein Verfahren der eingangs genannten Art bereitzustellen, die auf besonders einfache, kostengünstige, präzise und verschleißarme Weise die Erzeugung von wohldefinierten linearen Bewegungen ermöglichen.

Diese Aufgabe wird durch eine Aktorvorrichtung mit den Merkmalen des Patentanspruchs 1 sowie durch ein Verfahren mit den Merkmalen des Patentanspruchs 5 gelöst.

Eine solche Aktorvorrichtung zum Erzeugen einer linearen Bewegung umfasst einen hydraulischen Aktor mit einem ersten Kolbenelement zum Betätigen des Aktors und einem zweiten Kolbenelement zum Erzeugen der linearen Bewegung, welchen jeweilige fluidisch gekoppelte Arbeitsräume zugeordnet sind, deren Volumen durch Bewegung des jeweiligen Kolbenelements änderbar sind. Ferner ist ein Piezoaktor zum Ausüben einer Kraft auf das erste Kolbenelement vorgesehen. Durch die Kopplung von piezoelektrischer Ansteuerung und hydraulischer Übertragung ist eine besonders präzise Erzeugung von Linearbewegungen möglich. Insbesondere können die beiden Kolbenelemente so gestaltet werden, dass die Kraft, die das Piezoelement aufbringt, mit einer vorgegebenen Übersetzung übertragen wird. Auch der Vorschub des zweiten Kolbenelements als Reaktion auf die piezoelektrische Betätigung erfährt dann eine solche Übersetzung, so dass beispielsweise relativ große Vorschubbewegungen des Piezoelements in relativ kleine Kolbenbewegungen umgesetzt werden können, was zu einer besonders präzisen Platzierung des zweiten Kolbenelements und damit verbundener Elemente führt. Hierdurch eignet sich die beschriebene Aktorvorrichtung insbesondere für hochpräzise Justiervorgänge und dergleichen.

Die jeweiligen Arbeitsräume sind über zwei gegenläufig ausgerichtete Rückschlagventile miteinander verbunden. Ein gesteuertes Übertreten des Arbeitsfluids zwischen den Arbeitsräumen zu ermöglichen. Erfindungsgemäß weisen die beiden Rückschlagventile unterschiedliche Öffnungskräfte auf.

Ferner ist es zweckmäßig, wenn der Arbeitsraum des ersten Kolbenelements über ein Drosselelement mit einem Reservoir für ein Arbeitsfluid des hydraulischen Aktors gekoppelt ist.

Mit der beschriebenen Vorrichtung ergibt sich nun folgende Möglichkeit zum Erzeugen von Linearbewegungen, die auch über den Bewegungsspielraum des Piezoelements selbst hinausgehen. In einer ersten Bewegungsphase wird das Piezoelement so angesteuert, dass es eine schnelle Bewegung erzeugt. Die schnelle Bewegung wird auf den ersten Kolben übertragen und erzeugt einen Druck im Arbeitsfluid, der hinreichend ist, um das Ventil zwischen den Arbeitsräumen in Richtung auf den zweiten Arbeitsraum hin zu öffnen. Flüssigkeit strömt nun in den zweiten Arbeitsraum über und bewegt dort das zweite Kolbenelement, was die gewünschte Vorwärtsbewegung erzeugt.

In einer zweiten Bewegungsphase wird das Piezoelement langsam entgegen der Richtung, in der es in der ersten Bewegungsphase bewegt wurde, bewegt. Hierdurch wird zwar das erste Kolbenelement ebenfalls in Gegenrichtung zurückgezogen, durch die langsame Bewegung öffnet sich jedoch nicht das vom zweiten zum ersten Arbeitsraum gerichtet Rückschlagventil. Die entstehende Volumenänderung im ersten Arbeitsraum wird vielmehr vom Reservoir durch das Drosselelement ausgeglichen. Piezoelement und erstes Kolbenelement sind somit wieder in ihre Ausgangsposition zurückgestellt, während das zweite Kolbenelement in seiner Position bleibt.

Durch Wiederholen der beiden Phasen in alternierender Weise kann ein beliebig weiter Vorschub des zweiten Kolbenelements erzielt werden, der den eigentlichen Bewegungsspielraum des Piezoaktors überschreitet. Dies ermöglicht eine besonders präzise Platzierung des zweiten Kolbenelements über weite, lineare Bewegungspfade und bringt gleichzeitig den Vorteil mit sich, dass zum Halten einer vorgegebenen Position des zweiten Kolbenelements keine Energie aufwendet werden muss. Ferner ist der Bewegungsablauf im Unterschied zu den eingangs beschriebenen Aktoren nach dem Inchworm-Prinzip, unabhängig von der Haftreibung der beteiligten Komponenten und wird daher nicht von Verschmutzung, Öleintrag oder dergleichen beeinträchtigt.

Die Arbeitsräume können dabei zweckmäßigerweise durch jeweilige Zylinder gebildet werden, in welchen die Kolben beweglich aufgenommen sind. Eine Alternative hierzu stellt die Ausbildung der Arbeitsräume durch jeweilige Faltenbälge dar, die mit den Kolbenelementen gekoppelt sind. In dieser Ausführungsform sind alle wesentlichen beweglichen Teile der Aktorvorrichtung gekapselt und damit vor Verschmutzung geschützt, so dass sich ein langfristig zuverlässiger und verschleißarmer Betrieb der Vorrichtung ergibt.

Die Erfindung betrifft ferner ein Verfahren zum Einstellen einer Position eines linear beweglichen Elements, bei welchem mittels eines Piezoaktors eine Kraft auf ein erstes Kolbenelement ausgeübt wird, wobei durch die Kraftausübung ein dem ersten Kolbenelement zugeordneter Arbeitsraum in seinem Volumen verändert und die aufgebrachte Kraft auf ein zweites Kolbenelement, dessen zugeordneter Arbeitsraum fluidisch mit dem ersten Arbeitsraum gekoppelt ist, übertragen wird.

Wie bereits der erfindungsgemäßen Vorrichtung beschrieben, wird so eine Bewegung eines mit dem zweiten Kolbenelement gekoppelten linearbeweglichen Elements ermöglicht, welche über den Bewegungsspielraum des Piezoaktors selbst hinaus geht. Hierzu wird, wie bereits vorstehend erläutert, zum Ausführen einer Bewegung in eine vorgegebene Richtung der Piezoaktor in einer ersten Bewegungsphase so schnell in die vorgegebene Richtung bewegt, dass der durch die Bewegung erzeugte Druck im ersten Arbeitsraum die Schließkraft eines die Arbeitsräume in Bewegungsrichtung fluidisch verbindenden Rückschlagventils überwindet. Somit wird die Bewegung des Piezoaktors in der ersten Bewegungsphase auf das zweite Kolbenelement übertragen.

In einer zweiten Bewegungsphase wird der Piezoaktor so langsam gegen die vorgegebene Richtung bewegt, dass der durch die Bewegung erzeugte Druck im ersten Arbeitsraum die Schließkraft eines die Arbeitsräume entgegen der Bewegungsrichtung fluidisch verbindenden Rückschlagventils nicht überwindet. Im Gegensatz zur ersten Bewegungsphase sind hier die beiden Arbeitsräume nicht fluidisch verbunden, die Bewegung des Piezoaktors wird somit nicht auf das zweite Kolbenelement übertragen. Wie bereits erläutert, kann so eine Bewegung erzeugt werden, die über den eigentlichen Bewegungsspielraum des Piezoaktors hinausgeht, was durch die Übersetzung zwischen den beiden Kolbenelementen noch verstärkt oder auch vermindert werden kann.

Um die während der zweiten Bewegungsphase Volumenänderung im ersten Arbeitsraum zu kompensieren, wird während der zweiten Bewegungsphase dem ersten Arbeitsraum aus einem Reservoir über ein Drosselelement Arbeitsfluid zugeführt bzw. aus diesem zum Reservoir hin abgeführt.

Die erste und zweite Bewegungsphase werden vorzugsweise alternierend wiederholt, bis das zweite Kolbenelement sich in einer vorgegebenen Soll-Stellung befindet. Auf die beschriebene Weise lassen sich somit beliebig weite Linearbewegungen, die lediglich den Bewegungsspielraum des zweiten Kolbenelements, nicht jedoch durch die maximale Auslenkung des Piezoaktors begrenzt sind, erreichen. Insgesamt ermöglicht das Verfahren eine besonders präzise Erzeugung von Linearbewegungen bei möglichst geringem Verschleiß und einem besonders kompakten mechanischen Aufbau der zugrunde liegenden Vorrichtung.

Im Folgenden wird die Erfindung und ihre Ausführungsformen anhand der Zeichnung näher erläutert. Es zeigen:
- FIG 1: eine schematische Darstellung eines Ausführungsbeispiels einer erfindungsgemäßen Vorrichtung mit Hydraulikzylindern als hydraulischen Aktoren;
- FIG 2: ein hydraulisches Ersatzschaltbild der Vorrichtung gemäß FIG 1;
- FIG 3: eine schematische Darstellung eines alternativen Ausführungsbeispiels einer erfindungsgemäßen Vorrichtung mit Faltenbälgen als hydraulischen Aktoren; und
- FIG 4: ein hydraulisches Ersatzschaltbild der Vorrichtung gemäß FIG 3.

Eine im Ganzen mit 10 bezeichnete Vorrichtung zum Erzeugen einer Linearbewegung, beispielsweise für Justieraufgaben umfasst einen hydraulischen Aktor 12 einen ersten Kolben 14, der in einem zugeordneten Aufnahmeraum 16 beweglich aufgenommen ist und einen zweiten Kolben 18, der in einem zweiten Aufnahmeraum 20 beweglich gelagert ist. Der Aufnahmeraum 16 ist über eine erste Leitung 22 mit einem Einwegventil 24, welches in Richtung des zweiten Aufnahmeraums 20 öffnet, mit dem zweiten Aufnahmeraum 20 verbunden. Eine zweite Leitung 26 mit einem zweiten Einwegventil 28, welches in Richtung des ersten Aufnahmeraums 16 öffnet, verbindet den zweiten Aufnahmeraum 20 mit dem ersten Aufnahmeraum 16. Der erste Aufnahmeraum 16 ist ferner über eine Leitung 30, die ein Drosselelement 32 umfasst, mit einem Reservoir 34 für Betriebsfluid verbunden.

Zum Betätigen des ersten Kolbens 14 ist ein Piezoaktor 36 vorgesehen. Eine vom Piezoaktor 36 auf die Kolbenstange 38 des ersten Kolbens 14 ausgeübte Kraft wird vom ersten Kolben 14 hydraulisch auf den zweiten Kolben 18 übertragen, dessen Kolbenstange 40 mit dem zu bewegenden Element gekoppelt ist.

Um eine Bewegung in Richtung des Pfeils 42 zu bewirken, wird der Piezoaktor 36 gemäß dem Kraft-Zeit-Diagramm 44 angesteuert. In einer ersten Bewegungsphase wird der Piezoaktor 36 dabei schnell in Richtung des Pfeiles 46 bewegt. Die Bewegung überträgt sich auf den ersten Kolben 14, wobei der hierdurch erzeugte Druck im ersten Aufnahmeraum 16 die Schließkraft des Ventils 24 übersteigt, so dass Betriebsfluid vom ersten Aufnahmeraum 16 in den zweiten Aufnahmeraum 20 übertritt und dort eine Kraft auf den zweiten Kolben 18 auswirkt, so dass sich dieser in Richtung des Pfeils 42 bewegt. In einer zweiten Bewegungsphase wird das Piezoelement 36 in Richtung des Pfeiles 48 zurückgezogen, was jedoch deutlich langsamer erfolgt als die erste Bewegungsphase. Hierdurch bewegt sich der Kolben 14 ebenfalls in Richtung des Pfeiles 48, durch die langsame Bewegung wird jedoch die Schließkraft des Ventils 28 nicht überschritten. Es tritt also kein Betriebsfluid aus dem zweiten Aufnahmeraum 20 in den ersten Aufnahmeraum 16 über, der zweite Kolben 18 hält seine Position. Die Volumenänderung des ersten Aufnahmeraums 16 durch die Bewegung des erste Kolbens 14 wird durch Betriebsfluid ausgeglichen, welches aus dem Reservoir 34 durch die Leitung 30 und Drossel 32 in den ersten Aufnahmeraum 16 strömt.

Durch alternierende Wiederholung der beiden Bewegungsphasen kann somit der Kolben 18 weiter vorgeschoben werden als durch die Bewegungsreichweite des Piezoaktors 36 vorgegeben. Die Übersetzung zwischen den Kolben 14 und 18 ermöglicht dabei eine Positionierung des zweiten Kolbens 18 mit besonders hoher Präzision, wobei vorteilhafterweise zum Halten des Kolbens 18 in Position keine Kraft aufgewendet werden muss.

Soll der Kolben 18 in Gegenrichtung, also in Richtung des Pfeiles 15 zurückgezogen werden, so werden die beiden Bewegungsphasen umgekehrt, wie das Kraft-Zeit-Diagramm 52 veranschaulicht. Zunächst wird also der Piezoaktor 36 schnell in Richtung des Pfeiles 48 bewegt, so dass die resultierende Druckänderung im ersten Aufnahmeraum 16 die Schließkraft des Einwegventils 28 überschreitet und Flüssigkeit aus dem ersten Aufnahmeraum 20 in den ersten Aufnahmeraum 16 überströmen kann, wodurch sich der Kolben 18 in Richtung des Pfeiles 50 bewegt. In der zweiten Bewegungsphase wird der Piezoaktor 36 langsam in Richtung des Pfeiles 46 bewegt, wodurch wiederum die Schließkraft Einwegeventils 24 nicht überschritten wird, so dass der zweite Kolben 18 seine Position hält und Hydraulikfluid aus dem ersten Aufnahmeraum 16 über die Drossel 32 und die Leitung 30 ins Reservoir 34 zurückströmt. Auch hier kann durch alternierendes Wiederholen der beiden Bewegungsphasen eine weitere Bewegung des Kolbens 18 erzeugt werden.

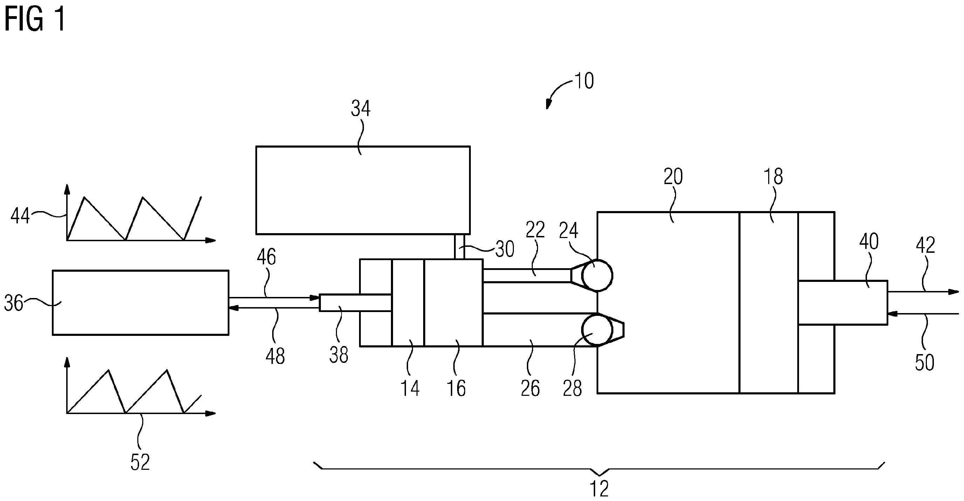

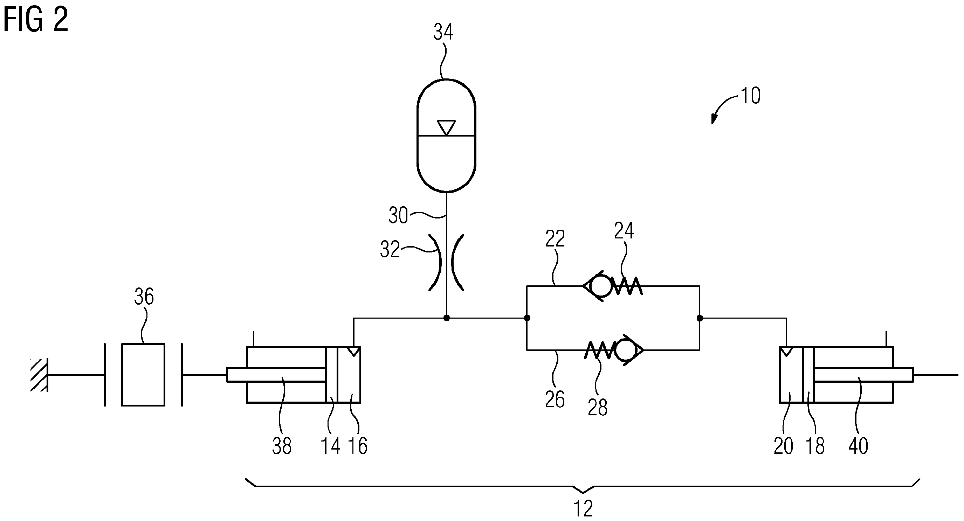

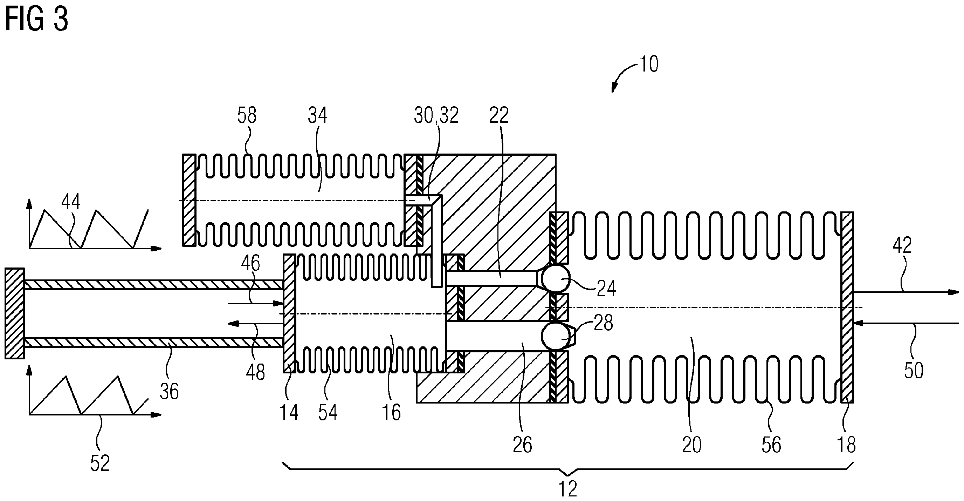

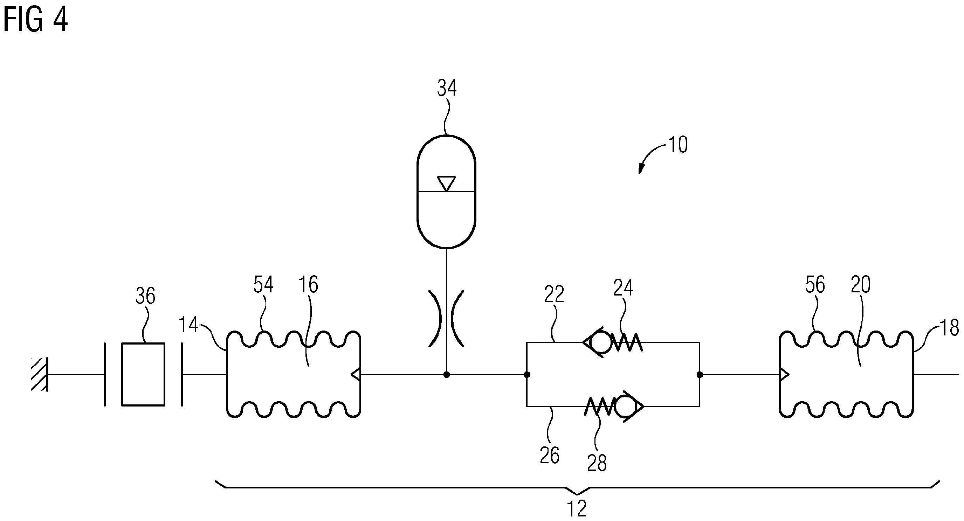

Figuren 3 und 4 zeigen eine alternative Ausbildung der Vorrichtung 10, bei welcher anstelle von Hydraulikzylindern Faltenbälge 54, 56 verwendet werden, die mit den Kolbenelementen 14, 18 verbunden sind und so die Aufnahmeräume 16, 20 zu bilden. Auch das Reservoir 34 wird durch einen Faltenbalg 58 gebildet. Ansonsten ist die Vorrichtung 10 gemäß den Figuren 3 und 4 funktionsgleich zur Vorrichtung 10 gemäß den Figuren 1 und 2. Die Verwendung von Faltenbälgen 54, 56, 58 ermöglicht es, die gesamte Vorrichtung 10 im Wesentlichen gekapselt auszubilden, so dass sie eine möglichst geringe Anfälligkeit für Verschmutzung und Verschleiß aufweist. Eine derartige Vorrichtung 10 kann daher besonders lange bei gleich bleibender Präzision betrieben werden.

## Patentansprüche

1. Aktorvorrichtung (10) zum Erzeugen einer linearen Bewegung, mit einem hydraulischen Aktor (12), welcher ein erstes Kolbenelement (14) zum Betätigen des Aktors und ein zweites Kolbenelement (18) zum Erzeugen der linearen Bewegung umfasst, welchen jeweilige fluidisch gekoppelte Arbeitsräume (16, 20) zugeordnet sind, deren Volumen durch Bewegen des jeweiligen Kolbenelements (14, 18) änderbar sind, wobei ein Piezoaktor (36) zum Ausüben einer Kraft auf das erste Kolbenelement (14) vorgesehen ist und wobei die jeweiligen Arbeitsräume (16, 20) über zwei gegenläufig ausgerichtete Rückschlagventile (24, 28) verbunden sind,
**dadurch gekennzeichnet, dass**
die beiden Rückschlagventile (24, 28) unterschiedliche Öffnungskräfte aufweisen.

2. Aktorvorrichtung (10) nach Anspruch 1,
**dadurch gekennzeichnet, dass**
der Arbeitsraum (16) des ersten Kolbenelements (14) über ein Drosselelement (32) mit einem Reservoir (34) für ein Arbeitsfluid des hydraulischen Aktors (12) gekoppelt ist.

3. Aktorvorrichtung (10) nach einem der Ansprüche 1 oder 2,
**dadurch gekennzeichnet, dass**
die Arbeitsräume (16, 20) durch jeweilige Zylinder gebildet sind, in welchen die Kolben (14, 18) beweglich aufgenommen sind.

4. Aktorvorrichtung (10) nach einem der Ansprüche 1 oder 2,
**dadurch gekennzeichnet, dass**
die Arbeitsräume (16, 20) durch jeweilige Faltenbälge (54, 56) gebildet sind.

5. Verfahren zum Einstellen einer Position eines linear beweglichen Elements, bei welchem mittels eines Piezoaktors (36) eine Kraft auf ein erstes Kolbenelement (14) ausgeübt wird, wobei durch die Kraftausübung ein dem ersten Kolbenelement (14) zugeordneter Arbeitsraum (16) in seinem Volumen verändert und die aufgebrachte Kraft auf ein zweites Kolbenelement (18), dessen zugeordneter Arbeitsraum (20) fluidisch mit dem ersten Arbeitsraum (16) gekoppelt ist, übertragen wird,
**dadurch gekennzeichnet, dass**
zum Ausführen einer Bewegung in eine vorgegebene Richtung der Piezoaktor (36) in einer ersten Bewegungsphase so schnell in die vorgegebene Richtung bewegt wird, dass der durch die Bewegung erzeugte Druck im ersten Arbeitsraum (16) die Schließkraft eines die Arbeitsräume (16, 20) in Bewegungsrichtung fluidisch verbindenden Rückschlagventils (24, 28) überwindet, wobei in einer zweiten Bewegungsphase der Piezoaktor (36) so langsam gegen die vorgegebene Richtung bewegt wird, dass der durch die Bewegung erzeugte Druck im ersten Arbeitsraum (16) die Schließkraft eines die Arbeitsräume (16, 20) entgegen der Bewegungsrichtung fluidisch verbindenden Rückschlagventils (24, 28) nicht überwindet.

6. Verfahren nach Anspruch 5,
**dadurch gekennzeichnet, dass**
während der zweiten Bewegungsphase zum Ausgleich der Volumenänderung im ersten Arbeitsraum (16) Arbeitsfluid zwischen dem ersten Arbeitsraum (16) und einem Reservoir (34) durch ein Drosselelement (32) ausgetauscht wird.

7. Verfahren nach Anspruch 5 oder 6,
**dadurch gekennzeichnet, dass**
die erste und zweite Bewegungsphase alternierend wiederholt werden, bis das zweite Kolbenelement (18) sich in einer vorgegebenen Sollstellung befindet.

## Claims

1. Actuator device (10) for producing a linear movement, having a hydraulic actuator (12), which comprises a first piston element (14) for actuating the actuator and a second piston element (18) for producing the linear movement, which piston elements (14, 18) are assigned respective fluidically coupled working chambers (16, 20), the volumes of which can be changed by movement of the respective piston element (14, 18), wherein a piezoelectric actuator (36) is provided for exerting a force on the first piston element (14), and wherein the respective working chambers (16, 20) are connected by means of two oppositely oriented check valves (24, 28),
**characterized in that**
the two check valves (24, 28) have different opening forces.

2. Actuator device (10) according to Claim 1,
**characterized in that**
the working chamber (16) of the first piston element (14) is coupled to a reservoir (34) for a working fluid of the hydraulic actuator (12) via a restrictor element (32).

3. Actuator device (10) according to one of Claims 1 or 2,
**characterized in that**
the working chambers (16, 20) are formed by respective cylinders, in which the pistons (14, 18) are movably accommodated.

4. Actuator device (10) according to one of Claims 1 or 2,
**characterized in that**
the working chambers (16, 20) are formed by respective bellows (54, 56).

5. Method for setting a position of a linearly movable element, in which a force is exerted on a first piston element (14) by means of a piezoelectric actuator (36), wherein the volume of a working chamber (16) assigned to the first piston element (14) is changed by the exertion of the force, and the force applied is transmitted to a second piston element (18), the associated working chamber (20) of which is fluidically coupled to the first working chamber (16),
**characterized in that**,
to carry out a movement in a predetermined direction, the piezoelectric actuator (36) is moved so quickly in the predetermined direction in a first phase of movement that the pressure produced in the first working chamber (16) by the movement overcomes the closing force of a check valve (24, 28) fluidically connecting the working chambers (16, 20) in the direction of movement, wherein, in a second phase of movement, the piezoelectric actuator (36) is moved so slowly counter to the predetermined direction that the pressure produced in the first working chamber (16) by the movement does not overcome the closing force of a check valve (24, 28) fluidically connecting the working chambers (16, 20) counter to the direction of movement.

6. Method according to Claim 5,
**characterized in that**
working fluid is exchanged between the first working chamber (16) and a reservoir (34) through a restrictor element (32) in order to compensate for the change in volume in the first working chamber (16) during the second phase of movement.

7. Method according to Claim 5 or 6,
**characterized in that** the first and second phases of movement are repeated alternately until the second piston element (18) is in a predetermined setpoint position.

## Revendications

1. Dispositif actionneur (10) destiné à produire un mouvement linéaire, comportant un actionneur hydraulique (12) qui comprend un premier élément piston (14) destiné à actionner l'actionneur et un second élément piston (18) destiné à produire le mouvement linéaire, éléments pistons auxquels sont associées des chambres de travail respectives (16, 20) couplées fluidiquement, dont le volume peut être modifié par le mouvement de l'élément piston correspondant (14, 18), dans lequel un actionneur piézoélectrique (36) destiné à exercer une force sur le premier élément piston (14) est prévu et dans lequel les chambres de travail respectives (16, 20) sont reliées par le biais de deux clapets anti-retour (24, 28) fonctionnant dans des sens opposés,
**caractérisé en ce que** les deux clapets anti-retour (24, 28) ont des forces d'ouverture différentes.

2. Dispositif actionneur (10) selon la revendication 1,
**caractérisé en ce que** la chambre de travail (16) du premier élément piston (14) est couplée, par le biais d'un élément d'étranglement (32), à un réservoir (34) pour un fluide de travail de l'actionneur hydraulique (12).

3. Dispositif actionneur (10) selon l'une des revendications 1 ou 2,
**caractérisé en ce que** les chambres de travail (16, 20) sont formées par des vérins respectifs dans lesquels les pistons (14, 18) sont reçus de manière mobile.

4. Dispositif actionneur (10) selon l'une des revendications 1 ou 2,
**caractérisé en ce que** les chambres de travail (16, 20) sont formées par des soufflets plissés respectifs (54, 56).

5. Procédé de réglage d'une position d'un élément à mouvement linéaire, dans lequel une force est exercée sur un premier élément piston (14) au moyen d'un actionneur piézoélectrique (36), dans lequel le volume d'une chambre de travail (16) associée au premier élément piston (14) est modifié en raison de la force exercée et la force appliquée est transmise à un second élément piston (18) dont la chambre de travail correspondante (20) est couplée fluidiquement à la première chambre de travail (16),
**caractérisé en ce que**
pour exécuter un mouvement dans une direction prédéfinie, l'actionneur piézoélectrique (36) est déplacé si rapidement dans la direction prédéfinie, dans une première phase de mouvement, que la pression produite dans la première chambre de travail (16) par le mouvement surmonte la force de fermeture d'un clapet anti-retour (24, 28) qui relie fluidiquement les chambres de travail (16, 20) dans la direction de mouvement,
dans lequel, dans une seconde phase de mouvement, l'actionneur piézoélectrique (36) est déplacé si lentement dans le sens contraire à la direction prédéfinie que la pression produite dans la première chambre de travail (16) par le mouvement ne surmonte pas la force de fermeture d'un clapet anti-retour (24, 28) qui relie fluidiquement les chambres de travail (16, 20) dans le sens contraire à la direction de mouvement.

6. Procédé selon la revendication 5,
**caractérisé en ce qu'**un fluide de travail est échangé entre la première chambre de travail (16) et un réservoir (34) à travers un élément d'étranglement (32), pendant la seconde phase de mouvement, pour compenser la variation de volume dans la première chambre de travail (16).

7. Procédé selon la revendication 5 ou 6,
**caractérisé en ce que** la première et la seconde phase de mouvement sont répétées en alternance jusqu'à ce que le second élément piston (18) se trouve dans une position de consigne prédéfinie.
